# FASCICULE DE BREVET EUROPEEN

(11) **EP 0 605 270 B1**
(45) Date de publication et mention de la délivrance du brevet: **29.03.2000**
(21) Numéro de dépôt: 93402947.1
(22) Date de dépôt: 06.12.1993
(51) Int. Cl.: F16B 21/16, E05B 63/12

(54) **Verrou à enclenchement de préférence automatique et son application notamment à un siège amovible de véhicule**
Vorzugsweise automatisches Verriegelungselement und dessen Verwendung, insbesondere für einen herausnehmbaren Fahrzeugsitz
Latch for locking, preferably automatically, and application thereof, particularly for removeable vehicle seats

(30) Priorité: 29.12.1992 FR 9215857
(43) Date de publication de la demande: 06.07.1994
(73) Titulaire: CESA COMPAGNIE EUROPEENNE DE SIEGES POUR AUTOMOBILES, 92307 Levallois-Perret Cédex (FR)
(72) Inventeur: Chabanne, Jean-Pierre, F-89710 Champvallon (FR); Anglade, Gérard, F-45700 Pannes (FR); Blanchard, Jean-Marie, F-45290 Nogent sur Vernisson (FR); Fourrey, François, F-25200 Montbeliard (FR)
(74) Mandataire: Polus, Camille

(56) Documents cités:
- CA-A- 1 181 112
- DE-C- 747 277
- US-A- 2 898 797
- US-A- 3 233 496
- US-A- 4 016 914
- US-A- 5 098 141

## Description

La présente invention concerne les dispositifs de fixation ou d'ancrage pour maintenir de manière amovible et sûre un siège de véhicule automobile terrestre sur le plancher de celui-ci.

Dans de nombreux secteurs techniques, il est nécessaire de maintenir d'une manière sans faille un objet sur une surface. Tel est le cas par exemple pour les véhicules automobiles terrestres dits "monospace" ou "un volume" ou encore "monocorps", qui tiennent à la fois de la conduite intérieure dite break et du véhicule utilitaire dit fourgonnette. Etant donné l'universalité d'utilisation visée pour ces véhicules, il est nécessaire de les équiper de sièges amovibles aptes à pendre des positions multiples et variées de préférence prédéterminées, c'est-à-dire aptes à prendre un certain nombre de positions discrètes et bien définies chacune.

Les sièges de ce type doivent, par exemple, pouvoir se déployer complètement en couchette, en fauteuil détente ou relax, en siège normal dit de conduite ou de route, ou se déployer partiellement en tablette. Ils doivent aussi pouvoir se rétracter pour se rabattre partiellement ou se replier totalement d'une manière compacte et relativement peu encombrante en vue de leur escamotage dans le véhicule ou de leur enlèvement de ce dernier.

Pour une telle application, il faut donc disposer d'un système d'ancrage et de verrouillage au plancher du véhicule d'un maniement aisé qui soit tel qu'un siège mis en place sur le plancher ne puisse être effectivement occupé que lorsque le système est non seulement verrouillé mais aussi réellement condamné de manière à le rendre indéfectible.

En effet, pour des raisons de sécurité, notamment en cas de chocs violents à grande composante longitudinale, repérée par rapport au véhicule, il ne faut pas que le siège se dérobe sous son occupant ou même soit entraîné par ce dernier dans le cas où la ceinture de sécurité qui équipe le siège n'est plus directement ancrée en deux ou trois points de la structure ou coque du véhicule, mais au contraire cette ceinture fait corps avec le siège et est en quelque sorte "embarquée" sur celui-ci, les différents points d'ancrage de la ceinture de sécurité étant établis directement sur le siège lui-même. On comprend que les efforts à absorber et/ou à transmettre en cas de chocs se trouvent essentiellement localisés notamment dans la zone du piètement de l'armature et du plancher du véhicule ainsi qu'à leur jonction.

On saisit donc toute la difficulté qu'il y a satisfaire à toutes ces prescriptions, souvent contradictoires, en particulier lorsqu'on se souvient qu'un tel système doit être produit en grande série et au moindre coût, et cela d'une manière particulièrement fiable.

L'invention a pour but de réaliser un verrou à enclenchement de préférence automatique à broche à bille expansible escamotable, qui convient pour verrouiller et déverrouiller rapidement deux parties l'une par rapport à l'autre dans des conditions de sécurité optimum.

Le verrou selon l'invention, qui convient à l'immobilisation d'un siège de véhicule sur le plancher de ce dernier, présente les particularités:
- d'une rapidité de verrouillage et de déverrouillage;
- d'encliquetage de préférence automatique par pression et de déverrouillage manuel par action sur une commande,
- du signalement à l'aide de témoins de sécurité, d'un mauvais encliquetage et/ou d'ancrage au plancher interdisant l'usage du siège,
- du rattrapage des tolérances de fabrication et jeux de fonctionnement et, au besoin, de l'indication d'une limite d'usure,
- ainsi que, au besoin et de préférence, de la protection de ses constituants essentiels contre les chocs et les souillures.

L'invention a pour objet un agencement d'un verrou dans un siège de véhicule automobile,
le siège comprenant une armature comportant des première et seconde parties reliées entre elles par une articulation, ces deux parties formant respectivement une semelle et un pied de l'armature, la seconde partie étant déplaçable par rapport à la première partie entre deux positions déployée et repliée,
le verrou comprenant un pêne muni d'un corps de verrouillage formant une broche, destiné à être encliqueté dans une ouverture ménagée dans une gâche, le corps étant porté par la première partie et la gâche étant fixée sur un plancher du véhicule, le corps portant au moins une bille mobile et une aiguille mobile de déplacement de cette bille entre une première position saillante à l'extérieur du corps, en contact avec la gâche, pour le verrouillage du pêne et uns seconde position escamotée dans le corps, pour le déverrouillage de ce pêne,
l'agencement comprenant une sécurité munie d'un premier élément porté par la seconde partie et d'un second élément porté par l'aiguille, ces éléments coopérant entre eux pour interdire le déplacement de la seconde partie du support de sa position déployée vers sa position repliée tant que l'aiguille n'est pas dans une position de verrouillage satisfaisant du pêne, de manière à permettre l'encliquetage ou la libération du corps uniquement lorsque la seconde partie est dans sa position déployée.

D'autres caractéristiques de l'invention ressortiront de la lecture de la description et des revendications qui suivent, ainsi que de l'examen du dessin annexé, donné seulement à titre d'exemple, où :

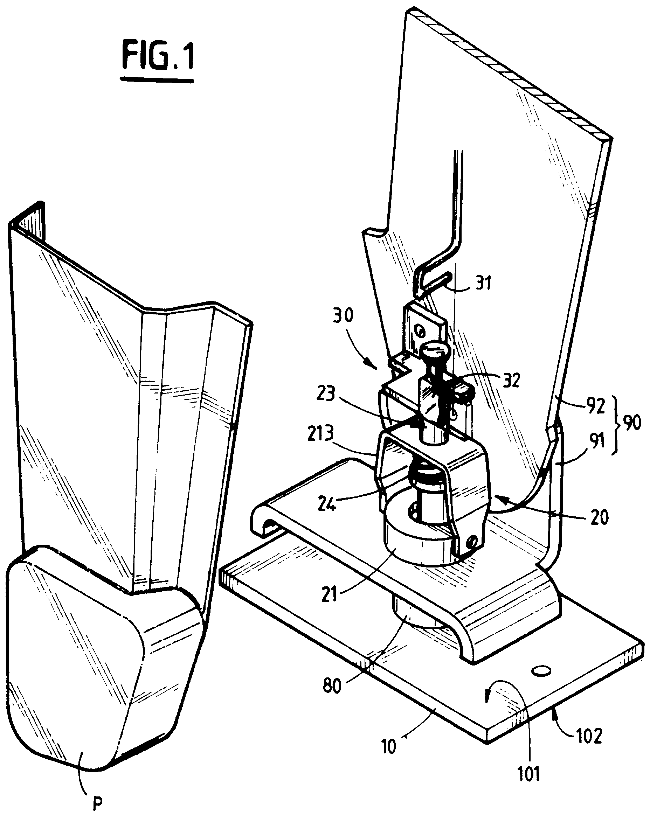

- la Figure 1 est une vue perpective d'un mode de réalisation d'un verrou selon l'invention dans son application à un siège de véhicule automobile terrestre;
- la Figure 2 est une vue éclatée perpective du mode de réalisation de la Figure 1 mais observé du côté opposé;
- la Figure 3 est une coupe longitudinale schématique du mode de réalisation de la Figure 1 en position enclenchée non verrouillée;
- les Figures 4A, 4B, 4C, 4D et 4E sont des vues partielles pratiquement analogues à celle de la Figure 3 dans divers états de fonctionnement ; et
- les Figures 5A, 5B 5C et 5D sont des vues analogues aux vues correspondantes de la Figure 4 d'un autre mode de réalisation simplifié.

Les verrous à broche à bille expansible escamotable notamment à enclenchement automatique, ainsi que les sièges de véhicules automobiles terrestres étant bien connus dans la technique, on ne décrira dans ce qui suit que ce qui concerne directement ou indirectement l'invention. Pour le surplus, l'homme du métier de la technique considérée puisera dans les solutions classiques courantes à sa disposition pour faire face aux problèmes particuliers auxquels il est confronté.

Dans ce qui suit, on utilise toujours un même numéro de référence pour identifier un élément homologue quel que soit le mode de réalisation ou sa variante d'exécution.

Pour la commodité de l'exposé, on décrira successivement chacun des constituants d'un verrou selon l'invention dans son application particulière à un siège de véhicule automobile terrestre avant d'en exposer la fabrication au besoin, et le fonctionnement.

Comme on le voit, un verrou de préférence à enclenchement automatique à broche à bille expansible escamotable selon l'invention comprend, essentiellement, une gâche 10, un pêne 20, une commande 30, un dispositif d'orientation 40, un détecteur de position 50, une sécurité 60, une sûreté 70 et de préférence un éjecteur 80. Ce verrou est destiné à être monté sur un support 90.

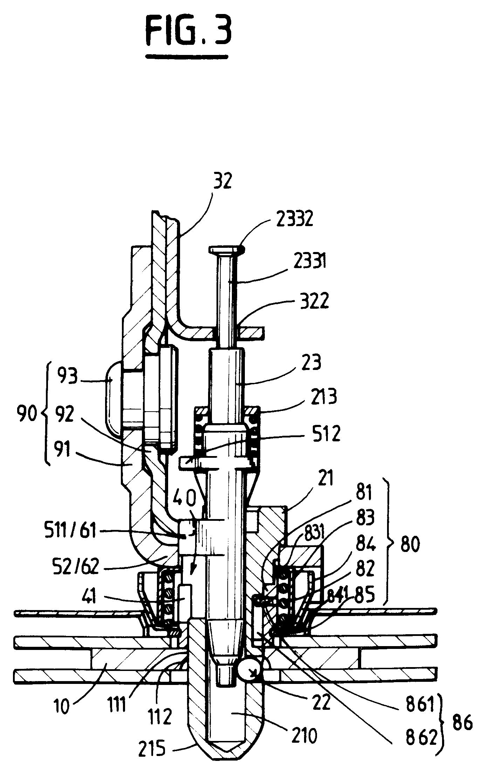

La gâche 10, faite par exemple d'une plaquette de tôle métallique appropriée, est destinée à être fixée sur un plancher de véhicule, notamment entre deux cloisons de ce dernier, comme illustré et non référencé sur la Figure 3. La gâche 10 comprend une face 101 d'appui et une face 102 de verrouillage. La gâche 10 est transpercée, de part en part, d'une ouverture 11 avec un passage 111 libre et une zone de contact 112 en retrait pour les raisons que l'on comprendra par la suite. Cette zone de contact 112 se présente, par exemple, à la manière d'une dépression ou d'un chanfrein annulaire ou similaire.

Le pêne 20, en forme de broche, comprend essentiellement un corps de verrouillage 21, au moins une bille 22, une aiguille 23 et une sollicitation élastique 24.

Le corps de verrouillage 21 est longiligne et creux, et présente une cavité 210 de guidage cylindrique ainsi qu'une extrémité 211 ouverte. Le corps 21 est pourvu d'au moins un canal 212 le transperçant pour déboucher dans la cavité 210 comme illustré. Ce canal est de préférence radial. De préférence, on utilise au moins trois canaux identiques équidistants. Un étrier 213 coiffe à distance, comme illustré, l'extrémité ouverte 211 du corps pour les raisons que l'on comprendra par la suite. Le corps 21 présente aussi une collerette 214 à proximité de son extrémité ouverte 211, et se termine à son extrémité opposée par un embout 215, de préférence fermé et de configuration conique ou sphéroïdale pour les raisons qui apparaîtront ultérieurement. Au moins une bille 22 est logée dans chaque canal pour y être retenue mobile entre une première position pour saillir partiellement à l'extérieur du corps afin de pouvoir rencontrer la zone de contact 112 de manière à verrouiller le pêne 20 sur la gâche 10, et une seconde position escamotée dans le corps afin de se séparer de la zone de contact 212 de manière à déverrouiller le pêne 20 de la gâche 10. Les billes sont retenues dans les canaux par exemple par sertissage ou similaire.

L'aiguille 23 est logée mobile dans la cavité 210 entre une position active dans laquelle elle est apte à faire saillir les billes dans leur première position et à les maintenir dans cette position, et une position inactive pour laquelle les billes peuvent prendre leur seconde position escamotée. L'aiguille 23 comprend un fût cylindrique 231 avec de préférence un épaulement 2311, un bout 232 intérieur constitué d'un tronc de cône 2321 avec au moins deux plages d'angles différents, convergent vers un pilote 2322. Pour les raisons que l'on comprendra par la suite, une plage à relativement grand angle se raccorde au pilote et une plage à relativement très petit angle se raccorde au fût. Les deux plages d'angles différents du tronc de cône sont contiguës et se raccordent directement ou bien sont distantes l'une de l'autre et reliées alors par une portion cylindrique dont la longueur axiale est approximativement de l'ordre de la longueur axiale de la plage à grand angle du tronc de cône. Ce tronc de cône et ce pilote permettent de faire passer les billes de l'une à l'autre de leurs deux positions. L'aiguille comprend aussi un bout 233 extérieur avec une tige 2331 terminée par une tête 2332 ou similaire pour les raisons qui apparaîtront par la suite.

La sollicitation élastique 24 est interposée entre le corps 21 et l'aiguille 23 pour agir sur celle-ci afin de la solliciter vers sa position active de manière à tendre à placer la ou les billes dans leur première position. Cette sollicitation élastique est constituée, par exemple, d'un ressort à boudin ou en hélice cylindrique interposé entre l'étrier 213 et l'épaulement 2311 comme illustré.

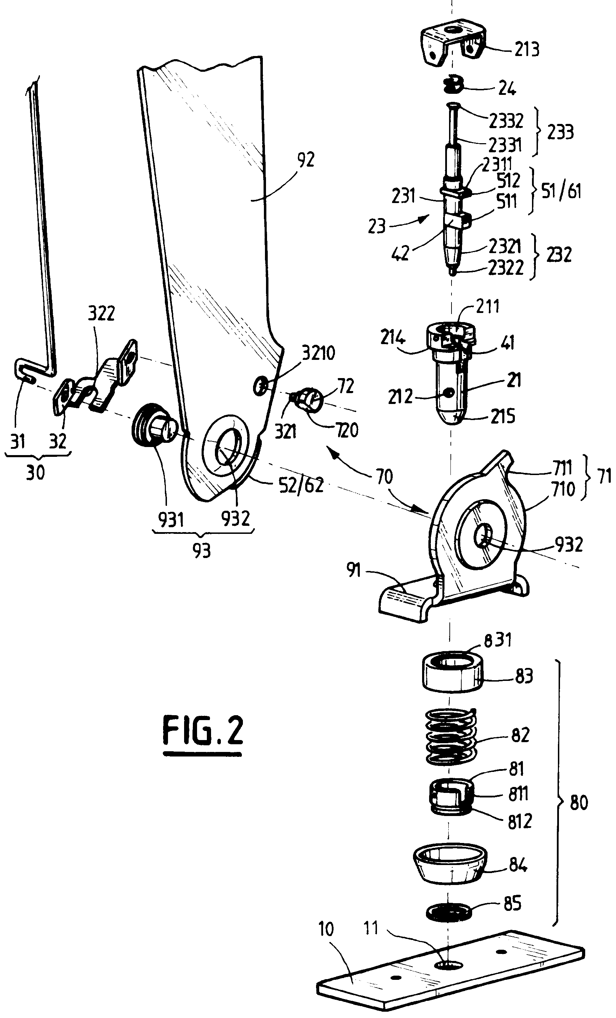

La commande 30, de préférence connectable et déconnectable à volonté pour les raisons qui apparaîtront par la suite, comprend par exemple une tirette 31 ou similaire sur laquelle on peut agir manuellement et un levier 32 monté basculant sur une cheville 321 et pourvu d'une fourche 322 ouverte à l'une de ses extrémités. La fourche 322 est destinée à venir chevaucher la tige 2331 du bout extérieur 233 de l'aiguille 23, sous la tête 2332. La tirette 31 est, par exemple, faite d'une tige métallique terminée par un crochet engagé dans un oeil approprié du levier, comme illustré clairement sur la Figure 2.

Le dispositif d'orientation 40 pour maintenir relativement fixe en rotation le corps 21 et l'aiguille 23 est par exemple du type à rainure et languette. Pour le mode de réalisation illustré, la rainure 41 est ménagée sur le corps 21 et la languette 42 est portée par l'aiguille 23. Ce dispositif d'orientation permet à l'aiguille de coulisser axialement dans le corps.

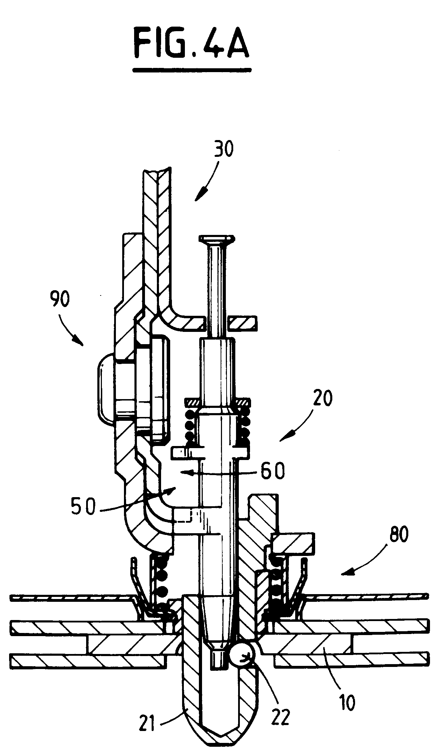

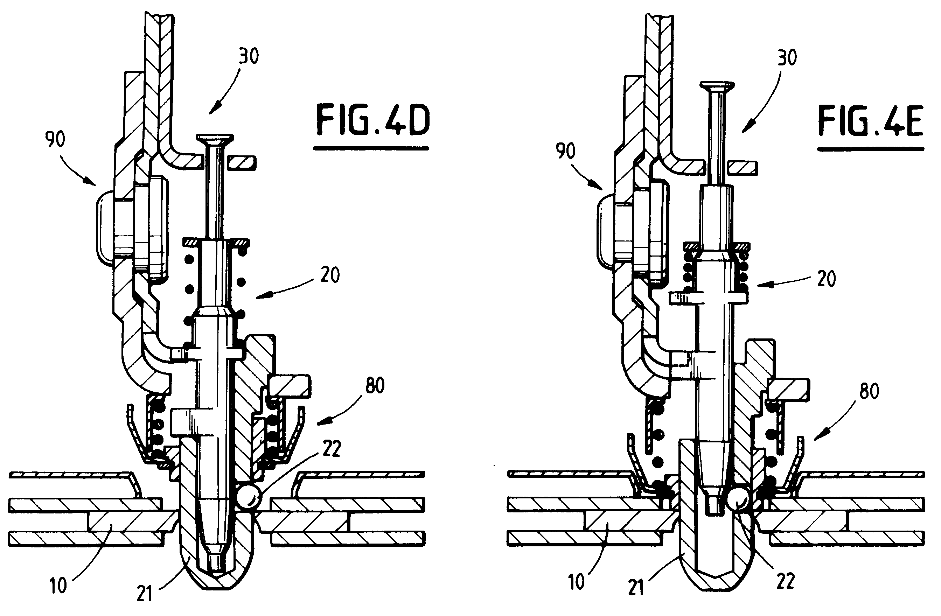

Le détecteur 50 de la position de l'aiguille 23 est constitué d'un organe 51 mobile porté par l'aiguille 23 et d'un organe de référence 52 qui est placé sur la trajectoire de l'organe mobile 51. L'organe de référence 52 est associé par exemple au support 90, sur lequel on reviendra par la suite et auquel le corps 21 est fixé. Ce détecteur 50 sert de témoin pour signaler que (a) soit le pêne 20 est engagé complètement dans la gâche 10 sans y être réellement verrouillé, l'aiguille 23 en position inactive ne chassant pas les billes 22 dans leur première position (Figures 4A-5A), (b) soit le pêne 20 est engagé incomplètement dans la gâche 10 en étant verrouillé, l'aiguille 23 en position active chassant les billes 22 dans leur première position (Figures 4D-5D). Dans le mode de réalisation illustré, l'organe mobile 51 est une butée ménagée sur le fût 231. De préférence, cette butée est dédoublée pour ménager une butée 511 "basse" pour signaler la position inactive de l'aiguille 23 (Figures 4A-5A) et une butée 512 "haute" pour signaler la position active de l'aiguille 23 (Figures 4D-5D).

Dans l'application particulière illustrée, le support 90 sur lequel le corps 21 du pêne 20 est fixé comprend une première partie 91 qui porte le corps 21 et une seconde partie 92 qui est réunie à la première partie 91 par une articulation 93 avec un axe 931 orthogonal à celui de la cavité 210 du corps 21. C'est cette seconde partie 92 qui porte l'organe de référence 52 qui se présente sous la forme d'un arrêtoir obtenu, par exemple, à l'aide d'un rebord plié sur la seconde partie 92 et centré sur l'axe 931. L'axe 931 est engagé dans des paliers 932 ménagés sur chacune des deux parties 91, 92 du support 90. Ceci est clairement illustré sur les figures du dessin. La seconde partie 92 est mobile relativement à la première partie 91 entre une position rabattue ou repliée et une position déployée qui correspondent par exemple aux configurations d'un siège, respectivement pour le rendre apte à recevoir un occupant assis ou pour être dégagé du véhicule par séparation d'avec le plancher. Ce support fait partie, par exemple, du piètement de l'armature du siège dont le pied est constitué par la seconde partie 92 et dont la semelle de ce pied, destinée à reposer sur le plancher, est constituée par la première partie 91.

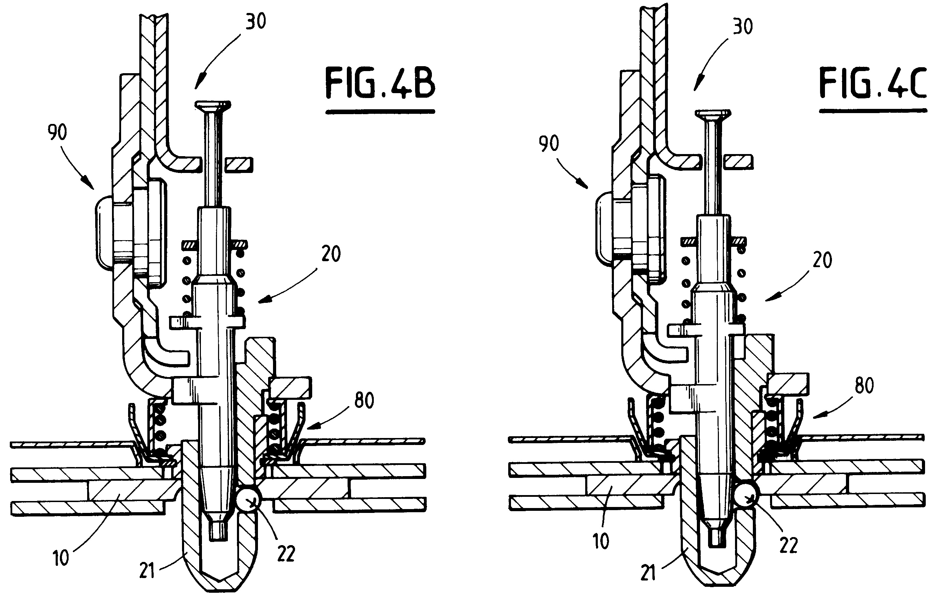

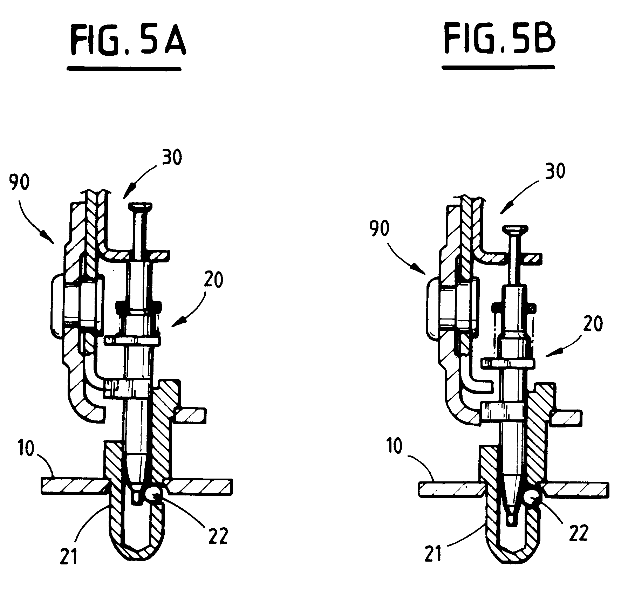

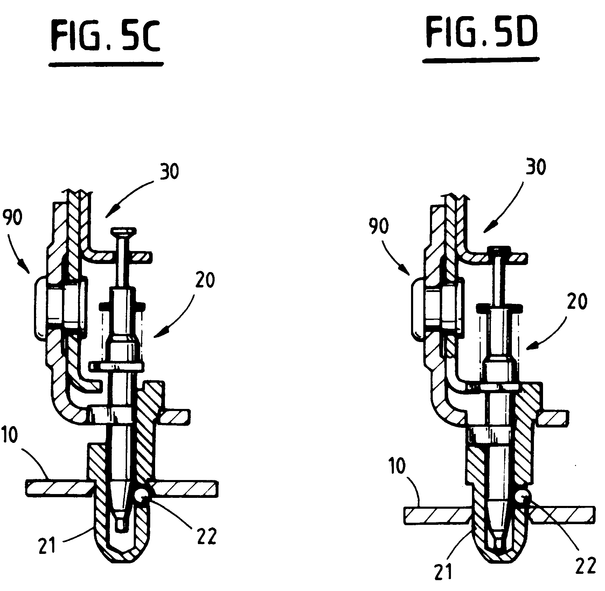

La sécurité 60 interdit le basculement de la seconde partie 92 du support relativement à la première partie 91 de celui-ci, pour passer de sa position déployée à sa position rabattue ou repliée, en coopération avec le détecteur de position 50, si le verrou est dans un état où il y a défaut d'engagement complet correct ou défaut de verrouillage satisfaisant. La sécurité 60 comprend deux éléments 61, 62 complémentaires coopérant. L'un 61 de ces éléments est, de préférence une protubérance associée à l'organe mobile 51 du détecteur et l'autre 62 de ces éléments est, de préférence un arrêtoir 62 associé à l'organe de référence 52 du détecteur. En examinant les figures du dessin, on voit que la seconde partie 92 ne peut basculer que lorsque l'arrêtoir 52/62 ne se trouve pas face à l'une des butées 511, 512 (Figures 4B, 4C ou Figures 5B, 5C). Inversement, si l'arrêtoir 52/62 est face à l'une ou l'autre des butées 511, 512 (Figures 4A, 4D ou Figures 5A, 5D), toute tentative de basculement de la seconde partie est entravée, par la rencontre de l'arrêtoir 52/62 avec celle des butées 511, 512 qui intercepte sa trajectoire.

La sûreté 70 est disposée pour neutraliser la commande 30 afin d'interdire le déclenchement du verrou quand la seconde partie 92 du support n'est pas dans sa position déployée et, aussi, pour assurer la connexion automatique de la commande 30 au bout extérieur 233 de l'aiguille 23 lorsque la seconde partie 92 du support passe de sa position rabattue ou repliée à sa position déployée. Cette sûreté comprend une came 71 et une contre-came 72. La came 71 est portée par la première partie 91 du support 90 et se présente à la manière d'un arc de cercle 710 centré sur l'axe 931 avec un dégagement 711 à l'une de ses extrémités. Au moins l'une des extrémités de la came est munie d'un arrêt qui fixe l'amplitude maximale du basculement de la deuxième partie 92 relativement à la première partie 91. La contre-came 72 est constituée d'un méplat 720 ménagé sur la cheville 321 portant le levier basculant 32 de la commande. La cheville 321 tourillonne librement dans un trou 3210 de la deuxième partie 92 alors que le levier 32 est calé en rotation sur la cheville 321 de manière à tourner avec cette dernière.

En examinant les figures du dessin, on voit que la cheville 321 avec le levier 32 ne peut basculer que lorsque le méplat 720 de la contre-came 72 est placé dans le dégagement 711 de la came 71. Pour toute autre position de la contre-came 72 sur la came 71, le méplat 720 au contact de l'arc de cercle 710 interdit un basculement simultané de la cheville avec son levier.

On observera que la languette 42, l'organe mobile 51 au moins partiellement pour ce qui concerne sa butée basse 511 et l'élément 61 en forme de protubérance sont réalisés de préférence d'un seul tenant sur le fût 231 de l'aiguille 23.

S'il y a lieu et, de préférence, le verrou comprend aussi un éjecteur 80 pour notamment séparer automatiquement la gâche 10 et le pêne 20 lorsque les billes 22 occupent leur seconde position. L'éjecteur 80 comprend essentiellement une douille coulissante 81 portée par le corps 21, avec une échancrure 811 et une gorge 812, un ressort 82, un cache-ressort 83 avec un rebord 831, un capot 84 avec un rebord 841 et un jonc élastique 85 tel un "circlips". Le ressort 82 de préférence du type à boudin ou hélicoïdal cylindrique est engagé entre les rebords 831 et 841 du cache-ressort 83 et du capot 84, comme cela apparaît à l'examen de la Figure 3. Cet éjecteur 80 est maintenu sous la première partie 91 du support 90 de manière à pouvoir coulisser sur le corps 21 du pêne 20.

En outre, un limiteur de course 86 définit l'amplitude de la translation axiale de la douille coulissante 81 sur le corps de verrouillage 21. Ce limiteur de course 86 comprend un téton 861 porté par la douille 81 et une fente 862 ménagée dans le corps 21. Comme on le voit en particulier sur la Figure 3, le téton 861 est engagé dans la fente 862 dont les deux extrémités lui servent de butées.

En position initiale, normale, lorsque le pêne 20 n'est pas engagé dans la gâche 10, ou introduit seulement partiellement, non à fond, dans celle-ci, on comprend que le ressort 82 de l'éjecteur 80 repousse vers l'extérieur, à son extension maximale la douille 81 (voir Figure 4E). En extension maximale, la douille 81 recouvre, coiffe alors les canaux 212 et interdit de la sorte aux billes 22 de saillir partiellement à l'extérieur du corps 21, dans leur première position, tout en assurant aussi la protection prévenant l'intrusion de corps étrangers. L'aiguille 23, qui est normalement soumise à l'action de la sollicitation élastique 24 vers sa position active, occupe alors une situation dans laquelle la plage à grand angle de son tronc de cône 2321 et son pilote 2322 reposent simultanément contre les billes 22: le coulissement de l'aiguille 23 est entravé et celle-ci ne peut pas atteindre sa position active. Ce n'est que lorsque la douille 81 démasque les canaux 212 qu'elle occulte normalement, que les billes 22 peuvent en principe prendre leur première position saillante et, de la sorte, "libérer" l'aiguille qui gagne alors, en principe, sa position active où elle condamne les billes 22 en position active, les empêchant, leur interdisant de reculer dans les canaux 212 en seconde position escamotée. On comprend donc que l'éjecteur est mobile entre une position de blocage vers laquelle il est normalement sollicité et où il retient les billes dans leur seconde position escamotée et empêche l'aiguille de gagner sa position active et une position de déblocage qu'il occupe à l'encontre de cette sollicitation et où il autorise en principe les billes à prendre leur première position en saillie et libère l'aiguille pour lui permettre, en principe, de gagner sa position active.

Tous les constituants d'un verrou selon l'invention sont réalisés à l'aide de matériaux classiques, de préférence métalliques, qui sont mis en forme et travaillés selon des techniques traditionnelles.

Tous les constituants d'un verrou selon l'invention sont réunis, montés et assemblés comme cela ressort clairement de l'examen des figures du dessin.

Pour les raisons qui apparaîtront par la suite, on indiquera seulement que, de préférence, la sollicitation élastique 24 développe des efforts moindres que ceux engendrés par l'éjecteur 80 dont le ressort 82 est plus puissant que le ressort de cette sollicitation élastique.

On décrira maintenant le fonctionnement de ce mode de réalisation du verrou selon l'invention.

Lorsqu'on veut verrouiller le pêne sur la gâche, il suffit d'exercer un pression de l'un vers l'autre :
- La douille coulisse sur le corps libérant les billes;
- les billes peuvent sortir radialement dans leur première position sous l'action du tronc de cône de l'aiguille qui s'engage dans le corps sous l'action de sa sollicitation élastique pour prendre sa position active;
- les billes condamnées par l'aiguille verrouillent irréversiblement le pêne relativement à la gâche.

Cette situation est illustre sur la Figure 4B.

L'introduction puis l'engagement et le verrouillage du pêne sur la gâche se font à l'encontre de l'effort développé par le ressort de l'éjecteur. Dans le cas de l'application à un siège, l'effort de ce ressort est, au moins en partie, compensé par le poids du siège lui-même.

Ce qui précède montre qu'on a réalisé un encliquetage ou enclenchement automatique et rapide du pêne sur la gâche tout en protégeant au maximum ce qui assure le verrouillage.

Pour séparer le pêne de la gâche, il suffit de procéder au déverrouillage. On actionne alors la tirette ou similaire pour par exemple faire basculer le levier qui fait sortir l'aiguille du corps en position inactive, le levier par sa fourche prenant appui contre la tête du bout extérieur de l'aiguille. On place de la sorte le pilote de l'aiguille à l'aplomb des canaux du corps et les billes qui ainsi ne sont plus condamnées peuvent alors se rétracter radialement dans leur seconde position, le ressort de l'éjecteur favorisant le dégagement du corps du passage de la gâche, du fait de l'existence du chanfrein ou similaire ménagé sur la zone de contact. Le ressort de l'éjecteur replace la douille coulissante sur le corps afin de protéger ce qui contribue au verrouillage et, simultanément maintenir les billes dans leur seconde position escamotée où elles empêchent l'aiguille de passer en position active de condamnation des billes.

On expliquera maintenant le fonctionnement de la sécurité et de la sûreté.

Comme on l'a vu auparavant, le pêne du verrou est monté solidaire d'une semelle par exemple en tôle pliée en forme d'équerre sur laquelle est articulée le pied du siège. Le pied est muni de l'arrêtoir obtenu à l'aide d'un bord rabattu en forme d'arc de cercle centré sur l'axe de l'articulation. Cet arrêtoir est destiné à coopérer avec les butées de l'aiguille en cas de mauvais encliquetage afin de servir de détecteur de position ou de témoin, et d'interdire l'usage du siège en pareil cas.

On rappellera que la position choisie pour le siège dans les phases de verrouillage et de déverrouillage du verrou est celle où il est rabattu, replié basculé par exemple vers l'avant, position où l'assise est pratiquement verticale approximativement parallèle au dossier du siège. On observera que l'arrêtoir est alors en dehors de la zone des butées de l'aiguille (voir Figures 4B ou 4C).

Pour verrouiller le siège sur le plancher, on procède comme indiqué précédemment.

Si aucune difficulté ne se manifeste, telle que présence de corps étrangers, souillures ou autres, le verrouillage se fait normalement et automatiquement comme exposé auparavant. On voit alors (Figures 4B ou 4C) que l'arrêtoir peut trouver un libre passage entre les deux butées de l'aiguille et que l'on peut faire basculer le pied relativement à sa semelle pour étendre le siège et le déployer en position "route" pour laquelle un occupant peut s'y asseoir.

Au contraire, si des difficultés se manifestent qui sont dues à des objets ou autres salissures qui empêchent les billes libérées par l'éjecteur de sortir, on se trouve dans la situation illustrée sur la Figure 4A ou 5A. L'aiguille est dans l'impossibilité de s'engager plus avant dans la cavité du corps pour prendre sa position active, et ne permet donc pas de faire saillir les billes dans leur première position sous la poussée du tronc de cône, afin de verrouiller le pêne sur la gâche. Dans une telle situation, la butée "basse" de l'aiguille se trouve placée sur la trajectoire de l'arrêtoir qu'elle intercepte. La butée "basse" s'oppose ainsi au basculement, à la rotation du pied interdisant la mise en position déployée, ou route, du siège. On observera que les butées s'engagent dans la rainure 41 du corps, de forme conjuguée, de manière à s'opposer avec une résistance considérable aux efforts mis en jeu.

Une telle situation correspond au cas où l'utilisateur pourrait croire à une mise en place et à un verrouillage corrects du verrou, en l'absence de la sécurité. En effet, seule la mise en place c'est-à-dire l'insertion du pêne dans l'ouverture de la gâche est correcte, le corps est bien descendu dans l'ouverture de la gâche sans cependant que le verrouillage ait pu être réellement fait.

Une autre source de difficulté se présente lorsque des corps étrangers se trouvent interposés entre le capot de l'éjecteur et la gâche. Cette situation est celle qui est illustrée sur la Figure 4D. Dans de telles circonstances, un corps étranger provoque le recul de la douille de l'éjecteur et donc la libération des billes dans leur première position en saillie mais en avant de la gâche c'est-à-dire du côté de sa face d'appui, sans engagement complet du corps du pêne dans la gâche. Le corps ne descend pas dans l'ouverture sans que cela soit nécessairement perceptible par l'utilisateur. Dans ce cas, l'aiguille descend à fond de course dans la cavité du corps, à bout de course de sa position active, et c'est sa butée "haute" qui intercepte alors la trajectoire de l'arrêtoir. C'est maintenant cette butée "haute" qui interdit comme auparavant la mise en position déployée du siège.

On exposera maintenant la manière dont s'opère le rattrapage ou la compensation des jeux dus aux tolérances de fabrication ou à l'usure de fonctionnement.

Comme on l'a exposé précédemment, l'aiguille 23 présente un bout intérieur avec un pilote et une zone en tronc de cône avec deux plages d'angles différents, la plage prolongeant le tronc de cône en direction du fût cylindrique présentant un angle très petit, comme clairement illustré sur les figures du dessin.

Quand les billes sont dans leur seconde position escamotée totalement, que ce soit en situation normale avant verrouillage ou par suite d'un blocage quelconque après mise en place du pêne sur la gâche, elles sont en appui contre la plage à angle plus important qui se raccorde au pilote. Dans cette situation les billes interdisent à l'aiguille de s'engager plus avant, en position active, dans la cavité du corps et empêchent ainsi le déploiement en position "route" du siège du fait de l'action de la butée "basse" de l'aiguille (Figures 4A, 5A).

Inversement, quand les billes occupent leur première position, où elles sont pratiquement totalement sorties, que ce soit par suite d'un recul de la douille de l'éjecteur dû à un corps étranger (Figures 4D, 5D) ou bien par suite d'un verrouillage apparemment correct mais sur une zone de contact de l'ouverture de la gâche trop grande, situation non illustrée, où alors les billes se trouvent en saillie, dans leur première position, du côté de la face de verrouillage de la gâche, mais assurent un verrouillage non satisfaisant car possédant du jeu. Les billes sont alors en appui contre le fût cylindrique de l'aiguille qui est parvenue à l'extrémité de sa course en position active. La butée "haute" de l'aiguille empêche alors le basculement du siège en position déployée "route" comme précédemment indiqué.

Entre ces deux positions extrêmes, et pour assurer un verrouillage correct, donc autoriser un basculement du siège en position déployée ou "route", les billes doivent impérativement se trouver saillantes en appui contre la plage à petite angle du tronc de cône de l'aiguille, dans leur première position.

On voit donc que la plage du tronc de cône à petit angle est destinée à compenser les variations de diamètre de l'aiguille et de la zone de contact, dues aux tolérances de fabrication ou à l'usure de fonctionnement.

En effet, dans le cas où l'aiguille a le diamètre maximal et la zone de contact de la gâche la dimension minimale, l'aiguille s'engage très peu dans la cavité du corps tout en autorisant le débattement du pied dont l'arrêtoir passe entre les deux butées de l'aiguille (Figure 4B ou 5B). Dans le cas inverse où l'aiguille a un diamètre minimal et la zone de contact de la gâche la dimension maximale, l'aiguille s'engage davantage dans la cavité du corps mais permet toujours à l'arrêtoir de se déplacer entre les deux butées de l'aiguille (Figure 4C ou 5C).

Cette technique de rattrapage des tolérances permet de compenser les usures éventuelles des pièces fonctionnelles, notamment aiguilles, ouverture de la gâche, jusqu'à un certain seuil à partir duquel l'aiguille pénètre pratiquement à fond dans la cavité du corps, situation où les billes sont en appui sur le fût cylindrique de l'aiguille (Figure 4D ou 5D). Dans cette situation, comme indiqué auparavant, la mise en position déployée ou "route" du siège est interdite. En effet, autrement le verrouillage obtenu du pêne sur la gâche risquerait d'être douteux ou source de bruit de par l'existence du jeu résiduel. Ceci constitue donc un indicateur ou témoin qui signale qu'une limite d'usure est atteinte voire franchie.

De ce qui précède, on comprend aussi qu'on ne peut actionner la tirette ou similaire de la commande uniquement que lorsque le siège est déployé, le pêne verrouillé sur la gâche, comme illustré sur les Figures 4B, 4C ou 5B, 5C puisqu'alors la contre-came peut basculer dans le dégagement situé à l'extrémité de la came. Autrement, le levier est maintenu immobilisé par l'intermédiaire du méplat en appui contre l'arc de cercle en l'empêchant de basculer. On comprend donc aussi qu'à coup sûr, la commande qui est déconnectée lorsque le siège occupe une position rabattue ou repliée, autre que la position déployée, est totalement inefficace puisque la fourche s'est séparée du bout extérieur de l'aiguille. Inversement lorsqu'on bascule le siège de sa position rabattue ou repliée à sa position déployée ou "route", le levier maintenu immobile et suivant le pied dans son basculement relatif par rapport à la semelle, se présente toujours avec une orientation en position correcte pour venir chevaucher le bout extérieur et, ensuite, être libéré seulement en fin de course pour pouvoir basculer sous l'action de la tirette.

Il est clair que pour l'application d'un verrou selon l'invention à un piètement de siège, on peut équiper un, plusieurs ou tous les pieds d'un tel verrou. Dans un tel cas, on adapte la commande afin qu'elle agisse simultanément sur tous les verrous de manière à pouvoir les déverrouiller ensemble par une seule manoeuvre. De même il est clair que la commande peut être motorisée.

De même, afin d'empêcher la pénétration de corps étrangers dans l'ouverture de la gâche qui ne manqueraient de gêner ou de perturber le fonctionnement du verrou selon l'invention, on peut munir la gâche d'un ou plusieurs volets mobiles, à rappel automatique en position d'occultation de l'ouverture pour maintenir celle-ci close en l'absence du pêne. Ce type de volets est classique sur les serrures notamment des portières des véhicules automobiles terrestres.

S'il y a lieu, un protecteur P approprié par exemple en matière synthétique, "habille" le verrou.

Ce qui précède met bien en lumière les particularités distinctives de l'invention ainsi que son intérêt, et les avantages qu'elle apporte.

## Revendications

1. Agencement d'un verrou dans un siège de véhicule automobile,
le siège comprenant une armature comportant des première (91) et seconde (92) parties reliées entre elles par une articulation (93), ces deux parties (91,92) formant respectivement une semelle et un pied de l'armature, la seconde partie (92) étant déplaçable par rapport à la première partie (91) entre deux positions déployée et repliée,
le verrou comprenant un pêne (20) muni d'un corps de verrouillage (21) formant une broche, destiné à être encliqueté dans une ouverture (111) ménagée dans une gâche (10), le corps (21) étant porté par la première partie (91) et la gâche (10) étant fixée sur un plancher du véhicule, le corps (21) portant au moins une bille mobile (22) et une aiguille mobile (23) de déplacement de cette bille (22) entre une première position saillante à l'extérieur du corps, en contact avec la gâche (10), pour le verrouillage du pêne (20), et une seconde position escamotée dans le corps, pour le déverrouillage de ce pêne (20),
l'agencement comprenant une sécurité (60) munie d'un premier élément (62), porté par la seconde partie (92), et d'un second élément (61), porté par l'aiguille (23), ces éléments (61,62) coopérant entre eux pour interdire le déplacement de la seconde partie (92) du support de sa position déployée vers sa position repliée tant que l'aiguille (23) n'est pas dans une position de verrouillage satisfaisant du pêne (20), de manière à permettre l'encliquetage ou la libération du corps (21) uniquement lorsque la seconde partie (92) est dans sa position déployée.

2. Agencement selon la revendication 1, dans lequel l'aiguille (23) est logée dans une cavité de guidage cylindrique (210) du corps (21) de manière à coopérer avec la bille (22) logée dans un canal (212) transperçant le corps (21) pour déboucher dans la cavité de guidage (210), l'aiguille (23) étant déplaçable entre des positions active et inactive dans lesquelles elle sollicite la bille dans ses positions saillante et escamotée respectivement.

3. Agencement selon la revendication 1 ou 2, dans lequel le premier élément (62) est un arrêtoir centré sur l'axe de l'articulation (93) et le second élément (61) est une protubérance.

4. Agencement selon l'une quelconque des revendications précédentes,
dans lequel l'aiguille (23) est déplaçable au moyen d'un commande (30) reliée à cette aiguille (23) par des moyens déconnectables (233,322),
et dans lequel une sollicitation élastique (24) est interposée entre le corps (21) et l'aiguille (23) pour solliciter cette dernière dans sa position active et placer la bille (22) dans sa position saillante, la commande (30) agissant à l'encontre de la sollicitation élastique (24) afin de placer l'aiguille (23) dans sa position inactive permettant le passage de la bille (22) entre ses positions saillante et escamotée de manière à séparer le pêne (20) de la gâche (10).

5. Agencement selon la revendication 4, dans lequel les moyens déconnectables comprennent
un levier (32) monté basculant sur la seconde partie (92) et muni d'une fourche ouverte (322) destinée à recevoir un bout extérieur (233) de l'aiguille (23), et
une tirette (31) reliée au levier (32) pour le faire basculer à l'encontre de la sollicitation élastique (24).

6. Agencement selon la revendication 4 ou 5, dans lequel le verrou comprend également une sûreté (70) qui neutralise la commande (30) pour interdire le déverrouillage du verrou lorsque la seconde partie (92) n'est pas dans sa position déployée.

7. Agencement selon les revendications 5 et 6 prises ensembles,
dans lequel la sûreté (70) comprend une came (71) et une contre-came (72), la came (71) étant portée par la première partie (91) et étant délimitée par un arc de cercle (710) centré sur l'axe (931) de l'articulation (93) et prolongé à l'une de ses extrémités par un dégagement (711),
et dans lequel la contre-came (72) est délimitée par un méplat (720) d'une cheville (321) d'articulation du levier (32) sur la seconde partie (92), le levier (32) étant calé sur cette cheville (321).

8. Agencement selon l'une quelconque des revendications précédentes, dans lequel le verrou comprend un éjecteur (80) pour contribuer à séparer le pêne (20) de la gâche (10) lorsque la bille (22) est dans sa position escamotée, l'éjecteur (80) étant mobile entre une position de blocage vers laquelle il est normalement sollicité et dans laquelle il retient la bille (22) dans sa position escamotée et empêche l'aiguille (23) de gagner sa position active, et une position de déblocage qu'il occupe à l'encontre de cette sollicitation, dans laquelle il autorise la bille (22) à prendre sa position saillante et libère l'aiguille (23) pour lui permettre de gagner sa position active.

9. Agencement selon la revendication 8, dans lequel l'éjecteur (80) comprend une douille (81) coulissante portée par le corps (21), un ressort (82) sollicitant la douille (81) vers la position de blocage, et un limiteur de course (86).

10. Agencement selon la revendication 9, caractérisé en ce que l'éjecteur (80) comprend un cache ressort (83) et un capot (84) entre lesquels le ressort (82) est engagé.

11. Agencement selon l'une quelconque des revendications précédentes, dans lequel le verrou comprend un dispositif d'orientation (40) pour maintenir le corps (21) et l'aiguille (23) relativement fixes en rotation.

12. Agencement selon la revendication 11, dans lequel le dispositif d'orientation (40) comprend une rainure (41) portée par le corps (21), et une languette (42) portée par l'aiguille (23).

13. Agencement selon l'une quelconque des revendications précédentes, dans lequel le verrou comprend un détecteur (50) de la position de l'aiguille (23) comprenant un organe mobile (51) porté par l'aiguille (23) et un organe de référence (52) placé sur la trajectoire de l'organe mobile (51) et porté par la seconde partie (92), de manière à signaler que a) soit le pêne (20) est engagé complètement dans la gâche (10) sans y être verrouillé, l'aiguille (23) en position inactive ne chassant pas la bille (22) de sa position escamotée, b) soit le pêne (20) est engagé dans la gâche (10) en étant verrouillé, l'aiguille (23) en position active chassant la bille (22) dans sa position saillante.

14. Agencement selon la revendication 13,
dans lequel l'organe mobile (51) est une butée ménagée sur un fût cylindrique (231) de l'aiguille (23), et
dans lequel l'organe de référence (52) est un arrêtoir.

15. Agencement selon la revendication 14, dans lequel la butée (51) est dédoublée et comprend une butée basse (511) signalant la position inactive de l'aiguille (23) et une butée haute (512) signalant la position active de cette aiguille (23).

16. Agencement selon les revendications 11,12 et 13 prises ensemble,
dans lequel la languette (42) est portée par l'aiguille (23), et
dans lequel cette languette (42), partiellement l'organe mobile (51) et l'élément (61) sont d'un seul tenant.

17. Agencement selon l'une quelconque des revendications précédentes, dans lequel l'aiguille (23) comprend un bout intérieur (232) délimité par un tronc de cône (2321) comportant deux plages successives d'angle propre différent pour assurer la compensation du jeu entre la gâche (10) et le pêne (20).

## Claims

1. Arrangement of a latch in a motor vehicle seat,
the seat comprising a frame having first (91) and second (92) parts connected to one another by an articulation (93), the two parts (91, 92) respectively forming a sole and a foot of the frame, the second part (92) being displaceable relative to the first part (91) between two positions, deployed and folded,
the latch comprising a striker (20) equipped with a locking body (21) forming a pin, intended to be snapped into an opening (111) provided in a keeper (10), the body (21) being carried by the first part (91) and the keeper (10) being fixed on a floor of the vehicle, the body (21) carrying at least one movable ball (22) and a movable needle (23) for displacement of the ball (22) between a first position protruding outside the body, in contact with the keeper (10), for the locking of the striker (20), and a second position retracted into the body, for the unlocking of the striker (20),
the arrangement comprising a security device (60) equipped with a first member (62), carried by the second part (92), and with a second member (61), carried by the needle (23), these members (61, 62) co-operating with each other to prevent the displacement of the second part (92) of the support from its deployed position to its folded position as long as the needle (23) is not in a position for satisfactory locking of the striker (20), so as to permit the snapping in or the freeing of the body (21) only when the second part (92) is in its deployed position.

2. Arrangement according to claim 1, wherein the needle (23) is housed in a cylindrical guide cavity (210) of the body (21) so as to co-operate with the ball (22) housed in a channel (212) transpiercing the body (21) to open out into the guide cavity (210), the needle (23) being displaceable between active and inactive positions in which it urges the ball respectively into its protruding and its retracted position.

3. Arrangement according to Claim 1 or 2, wherein the first member (62) is an arresting means centred on the articulation axis (93) and the second member (61) is a protuberance,

4. Arrangement according to any one of the preceding claims,
wherein the needle (23) is displaceable by means of a control (30) connected to the needle (23) by disconnectable moans (233, 322),
and wherein a resilient urging means (24) is interposed between the body (21) and the needle (23) to urge the latter into its active position and place the ball (22) in its protruding position, the control (30) acting counter to the resilient urging means (24) in order to place the needle (23) in its inactive position permitting the passage of the ball (22) between its protruding and retracted positions so as to separate the striker (20) from the keeper (10).

5. Arrangement according to claim 4, wherein the disconnectable means comprise
a lever (32) mounted tiltably on the second part (92) and equipped with an open fork (322) intended to receive an outer end (233) of the needle (23), and
a pull member (31) connected to the lever (32) to tilt it counter to the resilient urging means (24).

6. Arrangement according to claim 4 or 5, wherein the latch also comprises a safety device (70) which neutralizes the control (30) to prevent the unlocking of the latch when the second part (92) is not in its deployed position.

7. Arrangement according to claims 5 and 6 taken together,
wherein the safety device (70) comprises a cam (71) and a cam follower (72), the cam (71) being carried by the first part (91) and being delimited by an arc of a circle (710) centred on the axis (931) of the articulation (93) and extended at one of its ends by a release (711),
and wherein the cam follower (72) is delimited by a flat (720) of a spindle (321) for articulation of the lover (32) on the second part (92), the lever (32) being keyed on said spindle (321).

8. Arrangement according to any one of the preceding claims, wherein the latch comprises an ejector (80) to contribute to separating the striker (20) from the keeper (10) when the ball (22) is in its retracted position, the ejector (80) being movable between a blocking position towards which it is normally urged and in which it retains the ball (22) in its retracted position and prevents the needle (23) from reaching its active position, and an unblocking position which it assumes counter to this urging, in which it allows the ball (22) to assume its protruding position and frees the needle (23) to allow it to reach its active position.

9. Arrangement according to claim 8, wherein the ejector (80) comprises a sliding bush (81) carried by the body (21), a spring (82) urging the bush (81) into the blocking position, and a stroke limiter (86).

10. Arrangement according to claim 9, characterized in that the ejector (80) comprises a spring cover (83) and a cap (84) between which the spring (82) is engaged.

11. Arrangement according to any one of the preceding claims, wherein the latch comprises an orientation device (40) for holding the body (21) and the needle (23) fixed relatively in rotation.

12. Arrangement according to claim 11, wherein the orientation device (40) comprises a groove (41) carried by the body (21), and a tongue (42) carried by the needle (23).

13. Arrangement according to any one of the preceding claims, wherein the latch comprises a detector (50) for detecting the position of the needle (23) comprising a movable member (51) carried by the needle (23) and a reference member (52) placed on the trajectory of the movable member (51) and carried by the second part (92), so as to indicate that either a) the panel (20) is completely engaged in the keeper (10) without being locked therein, the needle (23) in the inactive position not driving the ball (22) from its retracted position, or b) the panel (20) is engaged in the keeper (10) while being locked, the needle (23) in the active position driving the ball (22) into its protruding position.

14. Arrangement according to claim 13,
wherein the movable member (51) is an abutment provided on a cylindrical barrel (231) of the needle (23), and
wherein the reference member (52) is an arresting means.

15. Arrangement according to claim 14, wherein the abutment (51) is split and comprises a lower abutment (511) indicating the inactive position of the needle (23) and an upper abutment (512) indicating the active position of the needle (23).

16. Arrangement according to claims 11, 12 and 13 taken together,
wherein the tongue (42) is carried by the needle (23), and
wherein said tongue (42), partially the movable member (51) and the member (61) are in one piece.

17. Arrangement according to any one of the preceding claims, wherein the needle (23) comprises an inner end (232) delimited by a truncated cone (2321) having two successive areas having a different angle to compensate for the play between the keeper (10) and the striker (20).

## Patentansprüche

1. Einrichtung zur Verriegelung in einem Sitz eines automobilen Fahrzeugs, wobei
der Sitz einen Aufbau aufweist, der einen ersten (91) und einen zweiten (92) Teil aufweist, welche untereinander mittels eines Gelenks (93) verbunden sind, wobei diese beiden Teile (91, 92) jeweils eine Unterlage und einen Fuß des Aufbaus bilden, und wobei der zweite Teil (92) bezüglich des ersten Teils (91) zwischen zwei Stellungen, ausgeklappt und zusammengeklappt, verstellbar ist,
die Verriegelungseinrichtung einen Riegel (20) aufweist, der mit einem Verriegelungskörper (21) versehen ist, der einen Stift bildet, der zu seinem Einklinken in eine in einer Schließplatte (10) vorgesehene Öffnung (111) bestimmt ist, wobei der Körper (21) von dem ersten Teil (91) gestützt ist, und die Schließplatte (10) auf dem Fußboden des Fahrzeugs befestigt ist, wobei der Körper (21) mindestens eine bewegbare Kugel (22) und eine bewegbare Zunge (23) zum Verschieben dieser Kugel (22) zwischen einer ersten aus dem Körper hervorstehenden Stellung zum Verriegeln des Riegels (20), wobei die Kugel Kontakt mit der Schließplatte (10) hat, und einer zweiten in den Körper eingezogenen Stellung zum Entriegeln dieses Riegels (20) aufweist,
die Einrichtung eine Sicherung (60) aufweist, die mit einem ersten von dem zweiten Teil (92) gehaltenen Element (62) und mit einem zweiten von der Zunge (23) gehaltenen Element (61) versehen ist, wobei die Elemente (61, 62) untereinander zusammenarbeiten, so daß sie ein Verschieben des zweiten Teils (92) der Abstützung aus seiner ausgeklappten Stellung in seine zusammengeklappte Stellung verbieten, solange sich die Zunge (23) nicht in einer befriedigenden Verriegelungsstellung des Riegels (20) befindet, so daß sie das Einklinken oder das Befreien des Körpers (21) nur dann erlauben, wenn sich der zweite Teil (92) in ausgeklappter Stellung befindet.

2. Einrichtung gemaß Anspruch 1, wobei die Zunge (23) dergestalt in einem zylindrischen Führungshohlraum (210) des Körpers (21) untergebracht ist, daß sie mit der in einem den Körper (22) durchdringenden Kanal (212) untergebrachten Kugel (22) so zusammenarbeitet, daß die Zunge in den Führungshohlraum (210) mündet, wobei die Zunge (23) verschiebbar ist zwischen einer aktiven und einer inaktiven Stellung, in welcher die Zunge die Kugel in ihre herausragende Stellung bzw. in ihre eingezogene Stellung drängt.

3. Einrichtung gemäß Anspruch 1 oder 2, wobei das erste Element (62) ein auf der Achse des Gelenks (93) zentrierter Feststeller ist und das zweite Element (61) eine Ausstülpung ist.

4. Einrichtung gemäß einem der vorangehenden Ansprüche,
wobei die Zunge (23) mittels eines Antriebs (30), der über eine abtrennbare Einrichtung (233, 322) mit der Zunge (23) verbunden ist, verschiebbar ist,
und wobei zwischen dem Körper (21) und der Zunge (23) eine elastische Kraft (24) eingebracht wird, so daß die Zunge (23) in ihre aktive Stellung gedrängt wird und die Kugel (22) in ihre herausragende Stellung gebracht wird, wobei der Antrieb (30) der elastischen Kraft (24) entgegenwirkt, so daß er die Zunge (23) in ihre inaktive Stellung bringt, die ein Hindurchtreten der Kugel (22) zwischen ihrer herausragenden und ihrer eingezogenen Stellung erlaubt, so daß der Riegel (20) von der Schließplatte (10) getrennt ist.

5. Einrichtung gemäß Anspruch 4, wobei die abtrennbare Einrichtung aufweist
einen Hebel (32), der schwenkbar auf dem zweiten Teil (92) befestigt ist, und der mit einer offenen Gabel (322) versehen ist, die zum Aufnehmen eines äußeren Endes (233) der Zunge (23) bestimmt ist, und
eine mit dem Hebel (32) verbundene Zugvorrichtung (31) zum Umschwenken des Hebels entgegen der elastischen Kraft (24).

6. Einrichtung gemäß dem Anspruch 4 oder 5, wobei die Verriegelung auch eine Absicherung (70) aufweist, die den Antrieb (30) neutralisiert, so daß ein Entriegeln der Verriegelung untersagt wird, solange der zweite Teil (92) nicht in seiner ausgeklappten Stellung ist.

7. Einrichtung gemäß des Ansprüchen 5 und 6 in Verbindung,
wobei die Absicherung (70) eine Nase (71) und ein Nasengegenstück (72) aufweist, wobei die Nase (71) von dem ersten Teil (91) gehalten wird und von einem auf der Achse (931) des Gelenks (93) zentrierten und an einem seiner Enden um einen Überstand (711) verlängerten Kreisbogen (710) begrenzt,
und wobei das Nasengegenstück (72) von einer Abflachung (720) eines Zapfens (321) zur gelenkigen Verbindung des Hebels (32) auf dem zweiten Teil (92) begrenzt ist, wobei der Hebel (32) auf dem Zapfen (321) verkeilt ist.

8. Einrichtung gemäß einem der vorangehenden Ansprüche, wobei die Verriegelung einen Auswerfer zum Beitragen zum Trennen des Riegels (20) von der Platte (10), wenn die Kugel (22) sich in ihrer (80) eingezogenen Stellung befindet, wobei der Auswerfer (80) bewegbar ist zwischen einer blockierenden Stellung, in die er normalerweise gedrängt wird, und in der er die Kugel (22) in ihrer eingezogenen Stellung zurückhält und die Zunge (23) am Erreichen ihrer aktiven Stellung hindert, und einer entblockierenden Stellung, die er entgegen dieser drängenden Kraft einnimmt, und in der er der Kugel (22) das Einnehmen ihrer herausragenden Stellung gewährt und die Zunge (23) befreit, so daß er ihr das Erreichen ihrer aktiven Stellung ermöglicht.

9. Einrichtung gemäß Anspruch 8, wobei der Auswerfer (80) eine von dem Körper gehaltene gleitbare Hülse (81), eine die Hülse (81) in Blockierstellung drängende Feder (82) und einen Hubbegrenzer (86) aufweist.

10. Einrichtung gemäß Anspruch 9, dadurch gekennzeichnet, daß der Auswerfer (80) eine Federabdeckung (83) und eine Kappe (84) aufweist, zwischen die die Feder (82) eingefügt ist.

11. Einrichtung gemäß einem der vorangehenden Ansprüche, wobei die Verriegelung eine Ausrichtungsvorrichtung (40) aufweist, mittels der der Körper (21) und die Zunge (23) einer Drehbewegung entgegenwirkend befestigbar sind.

12. Einrichtung gemäß Anspruch 11, wobei die Ausrichtungsvorrichtung (40) eine von dem Körper (21) getragene Einkerbung (41) und einen von der Zunge (23) gehaltenen Dorn (42) aufweist.

13. Einrichtung gemäß einem der vorangehenden Ansprüche, wobei die Verriegelung einen Detektor (50) zum Detektieren der Stellung der Zunge (23) aufweist, der ein von der Zunge (23) gehaltenes bewegbares Organ (51) aufweist und ein auf der Bahn des bewegbaren Organs (51) angeordnetes und von dem zweiten Teil (92) gehaltenes Referenzorgan (52), so daß angezeigt wird, daß entweder a) die Platte (20) vollständig in die Schließplatte (10) eingefügt ist, ohne daß sie darin verriegelt ist, wobei die sich in ihrer inaktiven Stellung befindende Zunge (23) die Kugel (22) nicht in die eingezogene Stellung treibt, oder b) die Platte (20) in verriegeltem Zustand in die Schließplatte (10) eingefügt ist, wobei die sich in ihrer aktiven Stellung befindliche Zunge (23) die Kugel (22) in die herausragende Stellung treibt.

14. Einrichtung gemäß Anspruch 13,
wobei das bewegbare Organ (51) ein auf einem zylindrischen Schaft (321) der Zunge (23) vorgesehener Anschlag ist, und
wobei das Referenzorgan (52) ein Feststeller ist.

15. Einrichtung gemäß Anspruch 14, wobei der Anschlag (51)
zweigeteilt ist und einen unteren die inaktive Stellung der Zunge (23) anzeigenden Anschlag (511) und einen oberen die aktive Stellung der Zunge (23) anzeigenden Anschlag (512) aufweist.

16. Anspruch gemäß den Ansprüchen 11, 12 und 13 in Verbindung,
wobei der Dorn (42) von der Zunge (23) gehalten ist, und
wobei dieser Dorn (42), zum Teil das bewegbare Organ (51) und das Element (61) in einem Stück bestehen.

17. Einrichtung gemäß einem der vorangehenden Ansprüche, wobei die Zunge (23) ein inneres Ende (232) aufweist, das von einem Kegelstumpf (2321) begrenzt ist, welcher zwei aufeinanderfolgende Bereiche mit unterschiedlichen Winkeln aufweist, so daß die Kompensation des Spiels zwischen der Schließplatte (10) und dem Riegel (20) gewährleistet ist.
